Europäisches Patentamt

European Patent Office

Office européen des brevets

(19)

(11) Veröffentlichungsnummer: **0 141 064**

**A1**

(12) **EUROPÄISCHE PATENTANMELDUNG**

(21) Anmeldenummer: **84109123.4**

(22) Anmeldetag: **01.08.84**

(51) Int. Cl.⁴: **B 65 G 60/00**

(30) Priorität: **12.10.83 DE 3337126**

(43) Veröffentlichungstag der Anmeldung:
**15.05.85 Patentblatt 85/20**

(84) Benannte Vertragsstaaten:
**AT BE CH DE FR GB IT LI LU NL SE**

(71) Anmelder: **Maelzer, Martin**
**Hagenburger Strasse 26**
**D-3050 Wunstorf(DE)**

(71) Anmelder: **Luther, Erich**
**Hagenburger Strasse 26**
**D-3050 Wunstorf(DE)**

(72) Erfinder: **Higgen, Hans Hermann**
**Am Bückeberg 7**
**D-3060 Stadthagen(DE)**

(72) Erfinder: **Maelzer, Martin**
**Hagenburger Strasse 26**
**D-3050 Wunstorf(DE)**

(74) Vertreter: **Schmidt-Evers, Jürgen, Dipl.-Ing. et al,**
**Patentanwälte Dipl.-Ing. H. Mitscherlich Dipl.-Ing. K.**
**Gunschmann Dipl.-Ing. Dr.rer.nat. W. Körber Dipl.-Ing. J.**
**Schmidt-Evers Dipl.-Ing. W. Melzer Steinsdorfstrasse 10**
**D-8000 München 22(DE)**

(54) **Vorrichtung zur Abgabe und/oder Aufnahme von Platten, insbesondere Leiterplatten, von bzw. in einem Plattenstapel.**

(57) Bei einer Vorrichtung zur Abgabe und/oder Aufnahme von Platten, insbesondere Leiterplatten, von bzw. in einem Plattenstapel (1) mit einer zwei einander gegenüberliegende Halteglieder (10,11) aufweisenden Aufnahmeeinrichtung (2) für den Plattenstapel (1) und mit einer zur Plattenabführung bzw. Plattenzuführung dienenden Plattenführungseinrichtung (14,15,16,17) unterhalb den Haltegliedern (10,11) der Aufnahmeeinrichtung (2) erfolgt eine solche Relativbewegung zwischen den Haltegliedern (10,11) der Aufnahmeeinrichtung (2) und der Plattenführungseinrichtung (14,15,16,17), daß der von den Haltegliedern (10,11) freigegebene Plattenstapel (1) mit seiner untersten Platte (23) von der Plattenführungseinrichtung (14,15,16,17) bzw. von einer darauf zugeführten Platte aufnehmbar ist, woraufhin der um die unterste Platte (23) verminderte bzw. vermehrte Plattenstapel (1) von den Haltegliedern (10,11) erfaßbar und die Plattenführungseinrichtung (14,15,16,17) entsprechend einem die Dicke einer Platte übersteigenden Abstand zur Abführung der aufgenommenen Platte (23) bzw. zur Zuführung einer neuen Platte absenkbar ist.

FIG. 2

EP 0 141 064 A1

0141064

31. Juli 1984

Vorrichtung zur Abgabe und/oder Aufnahme von
Platten, insbesondere Leiterplatten, von bzw.
in einem Plattenstapel
_____

Die Erfindung bezieht sich auf eine Vorrichtung zur
Abgabe und/oder Aufnahme von Platten, insbesondere
Leiterplatten, von bzw. in einem Plattenstapel mit
einer Aufnahmeeinrichtung für den Plattenstapel und
mit einer zur Plattenabführung bzw. zur Plattenzuführung dienenden Plattenführungseinrichtung.

Es ist bereits eine Vorrichtung zum Zuführen von Leiterplatten in ein Leiterplattenprüfgerät bekannt
(DE-OS 28 14 954), bei der die jeweils unterste, auf
einer Grundplatte aufliegende Leiterplatte aus einem
Vorratsstapel mittels einer Entnahmevorrichtung herausgeführt und zu einer Transportbahn gebracht wird. Als
Transportbahn wird dabei eine gegen die Horizontale
geneigte Transportbahn verwendet, auf der die Leiterplatten aufgrund der Schwerkraft bewegt werden. Dadurch ist es zwar auf einfache Weise möglich, Leiterplatten einzeln über eine Transportbahn in einzelne
Prüfstationen gelangen zu lassen. Es hat sich jedoch
gezeigt, daß die Herausführung der jeweiligen Leiterplatte aus dem Vorratsstapel zu einer zuweilen unerwünschten mechanischen Beanspruchung der Leiterbahnen
auf der abzuführenden Leiterplatte führt. Überdies
eignet sich die betreffende bekannte Vorrichtung nicht dazu, in einem Plattenstapel Leiterplatten aufzunehmen, die über die erwähnte Transportbahn der Vorrichtung zugeführt werden.

Es ist nun auch schon eine Vorrichtung zum Stapeln von Platten, insbesondere von Leiterplatten, von unten nach oben bekannt (DE-OS 28 14 955), bei der eine Auflage für die Platten und ein oder mehrere Greifvorrichtungen zum Anheben der jeweils aufgestapelten Platten vorgesehen sind. Jede Greifvorrichtung weist einen Träger und eine Hubvorrichtung auf, wobei der Träger mittels der Hubvorrichtung angehoben und abgesenkt wird. Die erwähnte Auflage weist im übrigen eine Vorrichtung zum Entfernen oder Auswerfen einer aufliegenden Leiterplatte auf. Obwohl es mit Hilfe dieser bekannten Vorrichtung auf relativ einfache Weise möglich ist, Platten, insbesondere Leiterplatten, aufnehmen und stapeln zu können, eignet sich die betreffende bekannte Vorrichtung jedoch nicht dazu, von einem Plattenstapel einzelne Platten in schonender Weise abgeben zu können.

Der Erfindung liegt die Aufgabe zugrunde, einen Weg zu zeigen, wie eine Vorrichtung der eingangs genannten Art auszubilden ist, bei der die von dem Plattenstapel jeweils abzuführende Platte bzw. die von dem Plattenstapel jeweils aufzunehmende Platte in schonender Weise abgeführt bzw. aufgenommen werden kann.

Gelöst wird die vorstehend aufgezeigte Aufgabe bei einer Vorrichtung der eingangs genannten Art erfindungsgemäß dadurch, daß die Aufnahmeeinrichtung zwei einander gegenüberliegende Halteglieder aufweist, die in zwei Stellungen relativ zueinander bewegbar sind, in deren einer der Plattenstapel erfaßt und in deren anderer der Plattenstapel freigegeben ist, daß die Plattenführungseinrichtung in Abstand unterhalb der Aufnahmeeinrichtung vorgesehen ist und daß die Aufnahmeeinrichtung und die Plattenführungseinrichtung derart relativ zueinander bewegbar sind, daß der von den Haltegliedern der Aufnahmeeinrichtung erfaßte Plattenstapel unter Freigabe von den Haltegliedern mit seiner untersten Platte von der Plattenführungseinrichtung bzw. von einer darauf zugeführten Platte aufnehmbar ist, woraufhin der um die unterste Platte verminderte bzw. vermehrte Plattenstapel von den Haltegliedern der Aufnahmeeinrichtung erfaßbar und die Plattenführungseinrichtung entsprechend einem die Dicke einer Platte übersteigenden Abstand von den Haltegliedern zur Abführung der aufgenommenen Platte bzw. zur Zuführung einer neuen Platte absenkbar ist.

Die Erfindung bringt den Vorteil mit sich, daß mit relativ geringem konstruktiven Aufwand sichergestellt ist, daß von einem Plattenstapel abzugebende bzw. aufzunehmende Platten relativ zu diesem Plattenstapel in besonders schonender Art und Weise geführt werden können, ohne daß es dabei zu einer unerwünschten Beanspruchung der jeweiligen Platte kommt. Erreicht wird dies durch das besondere Zusammenwirken der Halteglieder der Aufnahmeeinrichtung und der Plattenführungseinrichtung, so daß die Abführung bzw. Zuführung einer Platte erst in dem Fall erfolgt, daß die Plattenführungseinrichtung in hinreichendem Abstand von dem Plattenstapel ist. Von Vorteil ist ferner, daß die Vorrichtung gemäß der Erfindung sich nicht nur alternativ als gesonderte Vorrichtung zur Abgabe von Platten von einem Plattenstapel oder als Vorrichtung zur Aufnahme von Platten in einem Plattenstapel eignet, sondern daß diese Funktionen zeitlich nacheinander in ein und derselben Vorrichtung gemäß der Erfindung ausgeführt werden können. Von einer solchen Maßnahme kann man insbesondere in dem Fall Gebrauch machen, daß eine von einem Plattenstapel gerade abgegebene Platte wieder in dem Plattenstapel aufgenommen werden soll.

Vorzugsweise sind die Halteglieder so ausgebildet, daß sie jeweils an einer Mehrzahl von Platten anzuliegen vermögen. Dies bringt den Vorteil einer besonders stabilen Aufnahmeeinrichtung für den Plattenstapel mit sich.

Zweckmäßigerweise sind die Halteglieder in der Ebene der Platten des Plattenstapels verschiebbar. Dies bringt den Vorteil einer besonders einfachen Betätigungsvorrichtung für die Halteglieder mit sich.

Die Plattenführungseinrichtung weist vorzugsweise zwei runde Tragstäbe auf, die durch eine Heb- bzw. Senkeinrichtung in bezug auf die Halteglieder heb- bzw. senkbar sind. Dies bringt den Vorteil mit sich, daß die Relativbewegung zwischen der Plattenführungseinrichtung und den Haltegliedern auf besonders einfache Weise erzielt werden kann.

Die Plattenführungseinrichtung kann im übrigen die jeweilige Platte auf Druckluft tragende Tragstäbe enthalten. Dies bringt den Vorteil mit sich, daß die Platten auf besonders schonende Art und Weise geführt werden können.

Um eine besonders einfache Betätigung der Halteglieder und der Plattenführungseinrichtung zu ermöglichen, weisen diese fluidbetätigte Betätigungsglieder auf.

Die Halteglieder können im übrigen an fluidbetätigten Druckkissen anliegende Druckplatten aufweisen. Dies bringt den Vorteil besonders einfach aufzubauender Halteglieder mit sich.

0141064

Es ist auch möglich, mit der Plattenführungseinrichtung Einstellglieder zu verbinden, die den Bewegungshub der Plattenführungseinrichtung jeweils in einer Bewegungsrichtung festlegen. Dadurch ist auf besonders einfache Weise der Bewegungshub der Plattenführungseinrichtung einstellbar.

Es ist schließlich auch möglich, die Tragstäbe von Stützstäben tragen zu lassen, die mit Betätigungsgliedern und mit den Einstellgliedern verbunden sind. Hierdurch ergibt sich eine besonders günstig einzustellende und zu betätigende Plattenführungseinrichtung.

Die Plattenführungseinrichtung und die Aufnahmeeinrichtung für den Plattenstapel sind vorzugsweise derart schräg angeordnet, daß Platten einzeln durch die Erdschwerkraft abführbar bzw. zuführbar sind. Dies bringt den Vorteil einer besonders einfach aufzubauenden Plattenführungseinrichtung mit sich.

Um eine besonders sichere Abführung bzw. Zuführung von Platten von bzw. auf der Plattenführungseinrichtung zu ermöglichen, ist für diese Abführung bzw. Zuführung der Platten ein Schieber vorgesehen.

Anhand von Zeichnungen wird die Erfindung nachstehend beispielsweise näher erläutert.
Fig. 1 zeigt eine schematische Seitenansicht einer Vorrichtung, bei der die Erfindung anwendbar ist.
Fig. 2a bis 2e veranschaulichen in schematischen Ansichten das Prinzip der vorliegenden Erfindung.
Fig. 3 zeigt eine Schnittansicht längs der in Fig. 2 eingetragenen Linie III-III.
Fig. 4 zeigt in einem Ausschnitt einen Teil einer Plattenführungseinrichtung.
Fig. 5 zeigt in einer Draufsicht eine Vorrichtung gemäß der Erfindung.

Fig. 6 zeigt eine Schnittansicht längs der in Fig. 5 eingetragenen Linie IV-IV.

Fig. 7 zeigt in einer vergrößerten Ansicht eine Modifikation einer in Fig. 6 gezeigten Plattenführungseinrichtung.

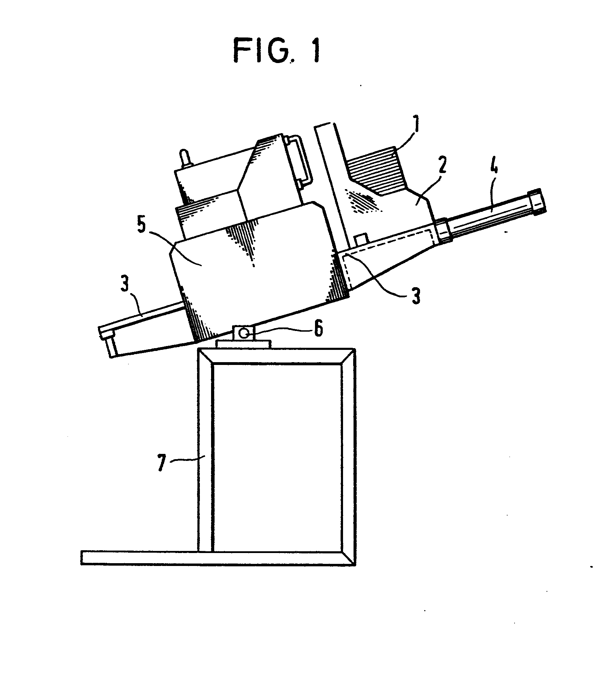

In Fig. 1 ist in einer schematischen Seitenansicht eine Vorrichtung gezeigt, die zur Abgabe und/oder Aufnahme von Platten vorgesehen ist, bei denen es sich insbesondere um Leiterplatten handelt. Die Platten sind in einem Plattenstapel 1 enthalten, welches von einer Aufnahmeeinrichtung 2 festgehalten ist, von der in Fig.1 eine Seitenwange dargestellt ist. Unterhalb der Aufnahmeeinrichtung 2 befindet sich eine Plattenführungseinrichtung 3, über die die jeweils unterste Platte des Plattenstapels 1 von diesem Plattenstapel wegführbar ist bzw. über die jeweils eine Platte zuführbar ist, um auf der Unterseite des Plattenstapels 1 in diesem gestapelt zu werden. Für die Abführung bzw. für die Zuführung der Platten von bzw. zu dem Plattenstapel kann bei der in Fig. 1 dargestellten Anordnung - diese ist in bezug auf die Horizontale schräg angeordnet - die Erdschwerkraft ausgenutzt werden. Es ist aber auch möglich, gegebenenfalls zusätzlich zur Ausnutzung der Erdschwerkraft eine gesonderte Schiebeeinrichtung 4 vorzusehen, die für eine entsprechende Plattenbewegung sorgt.

Die von dem Plattenstapel 1 jeweils abgegebenen Platten werden gemäß Fig. 1 einer Verarbeitungs- bzw. Prüfeinrichtung 5 zugeführt. Die dem Plattenstapel 1 für eine Stapelung von unten nach oben zuzuführenden Platten können in entsprechender Weise von dieser Einrichtung 5 her mittels der Schiebeeinrichtung 4 zugeführt werden.

0141064

Es ist aber auch möglich, die in dem Plattenstapel 1 zu stapelnden Platten über eine Auflage der Schiebeeinrichtung 4 zuzuführen.

Die vorstehend betrachtete Vorrichtung ist mittels eines Gelenks 6 an einer Tragvorrichtung 7 derart angebracht, daß eine Einstellung der betreffenden Vorrichtung entsprechend den jeweils vorliegenden Bedürfnissen vorgenommen werden kann.

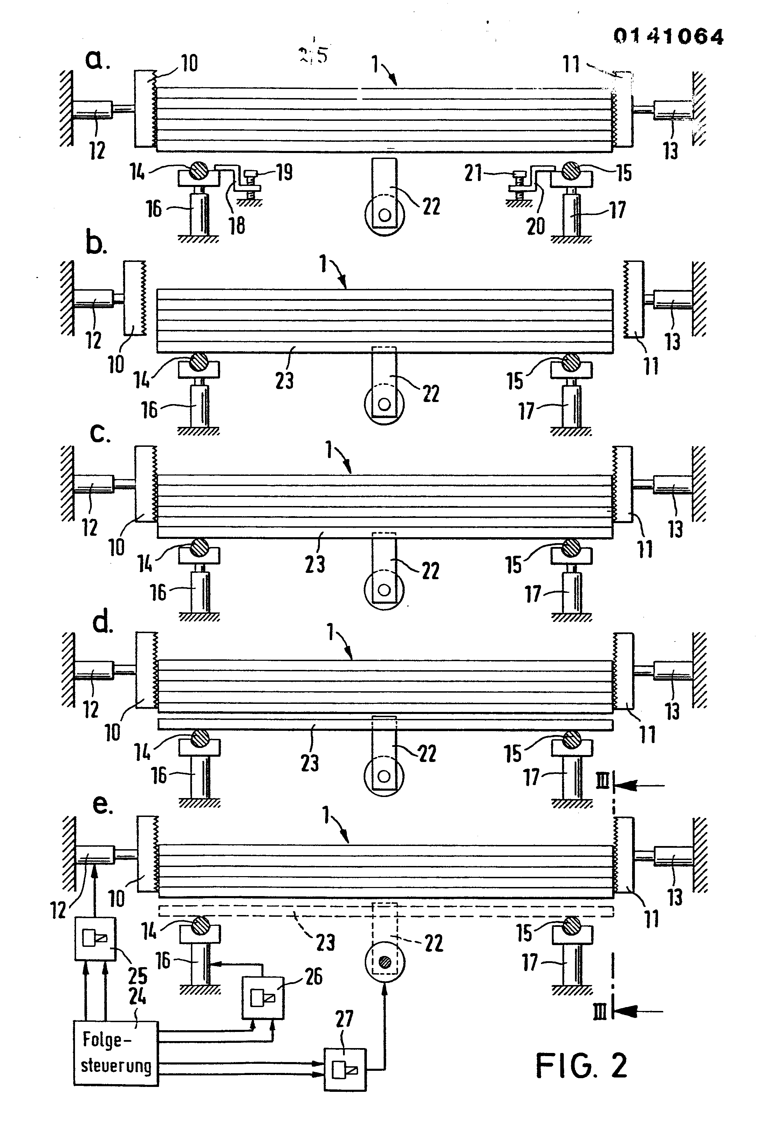

In Fig. 2a bis 2e ist das bei der Vorrichtung gemäß der Erfindung angewandte Prinzip näher veranschaulicht. In sämtlichen Ansichten ist dabei eine Aufnahmeeinrichtung mit zwei gegenüberliegenden Haltegliedern gezeigt. Jedes Halteglied weist eine geriffelte Klemmbacke 10 bzw. 11 und insbesondere fluidbetätigte Bewegungseinrichtungen 12 bzw. 13 auf, durch die die Klemmbacken 10,11 der Halteglieder in der Ebene der Platten des Plattenstapels 1 verschiebbar sind. Ferner sind in sämtlichen Ansichten gemäß Fig. 2a bis 2e zu der Plattenführungseinrichtung 3 gemäß Fig. 1 gehörende Trageinrichtungen dargestellt. Dabei ist im Bereich unterhalb jeder Klemmbacke eine Trageinrichtung vorgesehen. Unterhalb der Klemmbacke 10 ist eine Trageinrichtung 16 vorgesehen, die auf ihrer Oberseite einen runden Tragstab 14 aufweist. Unterhalb der Klemmbacke 11 ist eine Trageinrichtung 17 angeordnet, die einen runden Tragstab 15 trägt. Die Trageinrichtungen 16 und 17 sind bezogen auf die in Fig. 2a dargestellte Stellung absenkbar. Die betreffenden Trageinrichtungen sind dazu vorzugsweise fluidbetätigte Trageinrichtungen. Die oberen Stellungen der Trageinrichtungen 16, 17 sind durch Einstellglieder einstellbar, zu denen jeweils ein Einstellwinkel 18 bzw. 20 und eine Einstellschraube 19 bzw. 21 gehören. Diese Einstellglieder sind der Einfachheit halber jedoch lediglich in Fig. 2a dargestellt.

0141064

Zusätzlich zu den vorstehend betrachteten Elementen ist in Fig. 2a bis 2e noch eine Schiebeeinrichtung 22 angedeutet, deren Bedeutung noch ersichtlich werden wird. -

Um das bei der Erfindung angewandte Prinzip zu verdeutlichen, sei zunächst davon ausgegangen, daß die Aufnahmeeinrichtung mit ihren Klemmbacken 10,11 und die Plattenführungseinrichtung mit ihren Trageinrichtungen 16, 17 sich in ihren aus Fig. 2a ersichtlichen Stellungen befinden. In dieser Stellung ist die Unterseite der untersten Platte 23 des Plattenstapels 1 von der Oberseite der Plattenführungseinrichtung, d.h. von der Oberseite der Tragstäbe 14,15 dieser Plattenführungseinrichtung gerade um einen Abstand entfernt, der gleich der Dicke einer Platte des Plattenstapels ist. Die Platten des Plattenstapels 1 sind dabei von den Klemmbacken 10, 11 derart festgehalten, daß die unterste Platte 23 des Plattenstapels 1 lediglich über die halbe Plattendicke von den Klemmbacken 10, 11 festgehalten ist. In dieser Position kann die Schiebeeinrichtung 22 ungehindert unter der untersten Platte 23 des Plattenstapels 1 verschoben werden.

In Fig. 2b ist gezeigt, daß die Klemmbacken 10, 11 der Halteglieder zurückgezogen sind, so daß der gesamte Plattenstapel 1 auf den Tragstäben 14, 15 aufliegt.

In Fig. 2c ist gezeigt, daß die Klemmbacken 10, 11 der Halteglieder wieder aufeinander zu geführt sind und an den um die unterste Platte 23 verminderten Plattenstapel anliegen.

In Fig. 2d ist gezeigt, daß die relative Lage der Tragstäbe 14, 15 der Plattenführungseinrichtung zu

0141064

den Klemmbacken 10, 11 der Halteglieder verändert ist. Die Betätigungseinrichtungen 16, 17 sind nämlich gemäß Fig. 2d abgesenkt, wodurch auch die Platte 23, die auf den Tragstäben 14, 15 aufliegt, in bezug auf die übrigen Platten des Plattenstapels 1 abgesenkt ist. Nunmehr kann die Schiebeeinrichtung 22 in Tätigkeit gesetzt werden, die bereits seit Vorliegen der in Fig. 2b gezeigten Verhältnisse in einer solchen Stellung ist, daß sie an der auf den Tragstäben 14, 15 aufliegenden Platte 23 anzuliegen vermag. Dabei kann die Schiebeeinrichtung 22 diese Platte 23 unbehindert über die Tragstäbe 14, 15 abführen, ohne daß die Platte 23 mit ihrer Oberseite an der Unterseite des von den Klemmbacken 10, 11 festgehaltenen Plattenstapels anliegt bzw. dort reibt. Durch die linienförmige Anlage der Tragstäbe 14, 15 an der Platte 23 ist überdies die Gefahr einer Beschädigung der betreffenden Platte 23 auf ihrer Unterseite minimiert. Außerdem ist die Reibung im Zuge einer Bewegung dieser Platte herabgesetzt.

Nach Abführen der Platte 23 von den Tragstäben 14, 15 können die Trageinrichtungen 16, 17 dann wieder in ihre aus Fig. 2a ersichtliche Ausgangsstellung gebracht werden, woraufhin sich die vorstehend erläuterten Verhältnisse wiederholen.

In Fig. 2e sind die in Fig. 2d dargestellten Verhältnisse nochmals gezeigt. Dabei ist durch gestrichelte Linien angedeutet, daß die unterste Platte 23 mittels der Schiebeeinrichtung 22 abgeführt werden soll bzw. ist. Außerdem sind in Fig. 2e noch einige Einrichtungen angedeutet, mit deren Hilfe die vorstehend erläuterten Bewegungen gesteuert werden. So ist gemäß Fig. 2e eine Folgesteuerung 24 vorgesehen, die über Magnetrelais 25, 26, 27 die Wirksamkeit von Fluidkreisen der Bewegungseinrichtungen 12,13, der Trageinrichtungen 16,17 bzw. der Schiebeeinrichtung 22 steuert. An dieser Stelle sei darauf hingewiesen, daß die Fluidkreise entweder hydraulische Kreise oder pneumatische Kreise sind.

Durch die vorstehend anhand der Fig. 2a bis 2e erläuterten Vorgänge läßt sich die jeweils unterste Platte 23 des Plattenstapels 1 von diesem Plattenstapel abführen. Es ist aber auch möglich, dieselbe Vorrichtung dazu heranzuziehen, Platten in dem Plattenstapel 1 von unten her zu stapeln. Dazu wird in der Position gemäß Fig. 2d eine Platte, wie die Platte 23, ohne an den von den Klemmbacken 10, 11 festgehaltenen Platten des Plattenstapels 1 anzuliegen unter diesen Plattenstapel 1 geführt. Sodann kann die betreffende Platte 23 an den Plattenstapel 1 angehoben werden (Fig. 2c), um nach Freigabe des Plattenstapels durch die zurückgezogenen Klemmbacken 10, 11 (Fig. 2b) noch weiter mit dem gesamten Plattenstapel 1 angehoben zu werden, bis schließlich eine Stellung erreicht ist, in der das Zusammenführen der Klemmbacken 10, 11 dazu führt, daß diese Klemmbacken 10, 11 an sämtlichen Platten des Plattenstapels 1 anliegen (Fig. 2a). In Abweichung von den oben erläuterten Verhältnissen bei der Abgabe der jeweils untersten Platte eines Plattenstapels von diesem Plattenstapel ist bei den gerade erläuterten Verhältnissen die Hubbewegung der Trageinrichtungen 16, 17 so, daß über die aus Fig. 2a bis 2c gezeigten Einstellungen hinaus eine Bewegung über den Abstand erfolgt, um den im Zuge der Abgabe von Platten von dem Plattenstapel dieser jeweils bei zurückgezogenen Klemmbacken 10, 11 auf die Tragstäbe 14,15 hinabfällt.

Es sei angemerkt, daß es in Abweichung von den vorstehend erläuterten Verhältnissen aber auch möglich ist, die Tragstäbe 14, 15 der Trageinrichtungen bei an dem Plattenstapel 1 anliegenden Klemmbacken 11,(Fig.2a) an der Unterseite der untersten Platte 23 dieses Plattenstapels 1 anliegen zu lassen, um nach Zurückziehen der Klemmbacken 10, 11 soweit abgesenkt zu werden, daß die Wiederanlage der Klemmbacken 10, 11 lediglich den um die unterste Platte verminderten Plattenstapel erfaßt (siehe Fig. 2c), woraufhin die Trageinrichtung dann noch weiter abgesenkt wird (siehe Fig. 2d). In diesem Falle würden Trageinrichtungen die gleichen Bewegungen dann ausführen, wenn mit Hilfe der betreffenden Vorrichtung Platten in dem Plattenstapel 1 von unten her zu stapeln sind.

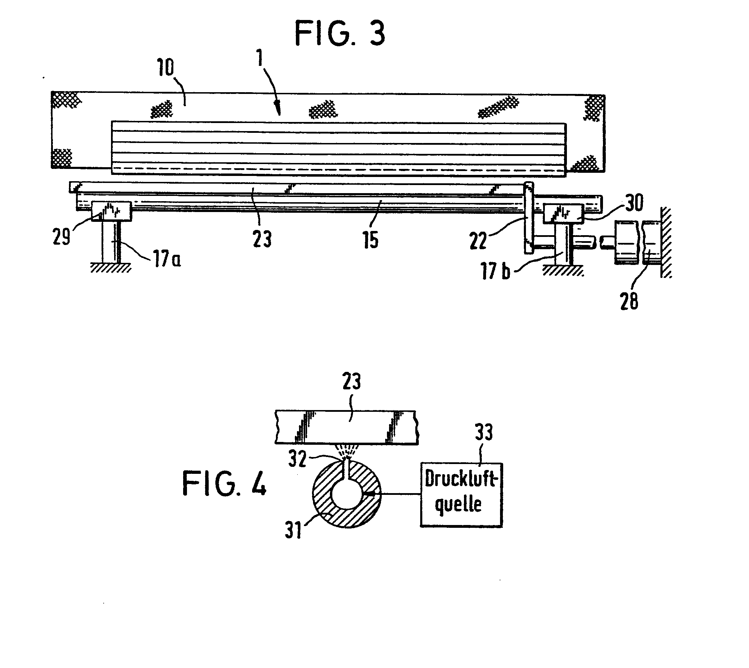

In Fig. 3 ist eine Schnittansicht längs der in Fig. 2 eingetragenen Linie III-III gezeigt. Gemäß Fig. 3 sieht man auf die Klemmbacke 10, durch die zusammen mit der in Fig. 3 nicht sichtbaren Klemmbacke 11 der um die unterste Platte 23 verminderte Plattenstapel 1 festgehalten wird. Die Platte 23 liegt auf dem in Fig. 3 sichtbaren Tragstab 15 auf, der von Trageinrichtungen 17a, 17b getragen wird, die in Fig. 2a bis 2e lediglich durch die Trageinrichtung 17 dargestellt sind. Die beiden Trageinrichtungen 17a, 17b weisen jeweils eine Aufnahmeeinrichtung 29 bzw. 30 für die Aufnahme des Tragstabes 15 auf.

In Fig. 3 ist noch die Schiebeeinrichtung 22 sichtbar, die durch eine Betätigungseinrichtung 28 verschiebbar ist und die somit die Platte 23 zu verschieben gestattet.

In Fig. 4 ist eine andere Möglichkeit der Aufnahme von Platten auf der Plattenführungseinrichtung veranschaulicht. Gemäß Fig. 4 ist in vergrößerter Ansicht ein Ausschnitt der erwähnten Platte 23 gezeigt, die auf Luftpolstern getragen wird. Ein Luftpolster wird dadurch gebildet, daß von einer Druckluftquelle 33 abgegebene Druckluft aus Austrittsöffnungen 32 von rohrförmigen Tragstäben 31 abgegeben wird.

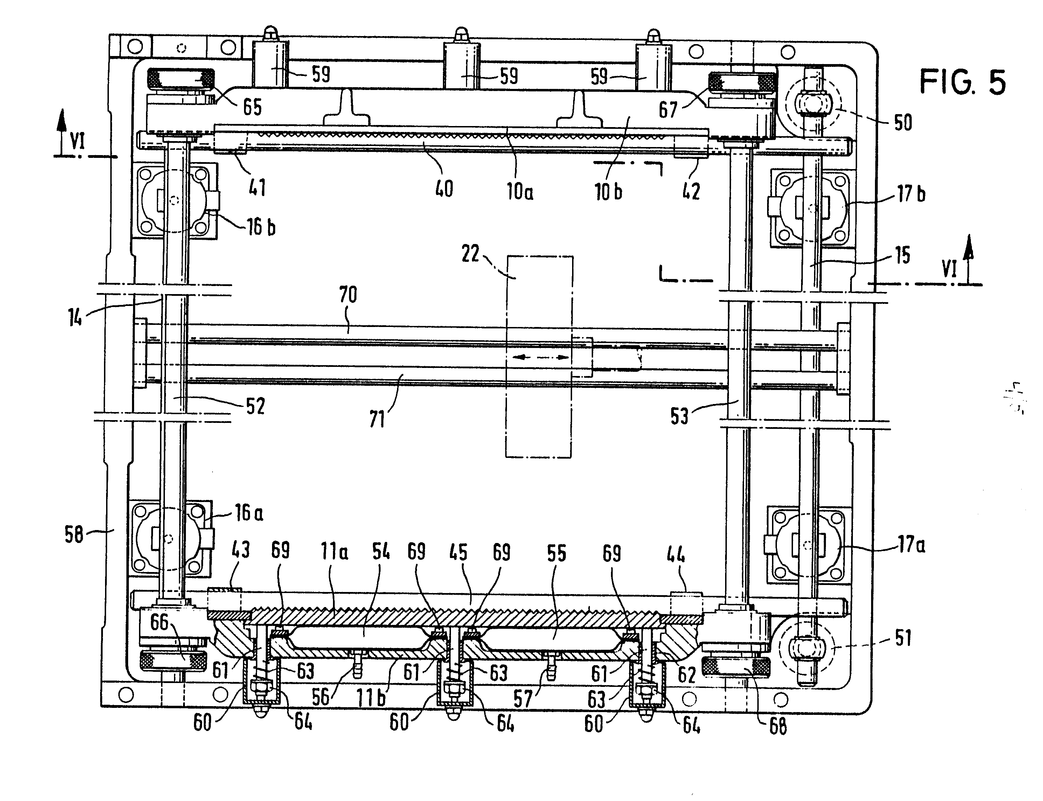

In Fig. 5 ist in einer teilweise geschnittenen Draufsicht eine tatsächliche Ausführungsform der Vorrichtung gemäß der Erfindung gezeigt. Gemäß Fig. 5 sind die in Fig. 2a bis 2e angedeuteten Klemmbacken 10, 11 jeweils durch zwei Teile 10a, 10b bzw. 11a, 11b gebildet. Die einen Teile 10a, 11a der Klemmbacken sind auf ihrer jeweiligen Außenseite mit einer Riffelung versehen, und außerdem sind sie relativ zu den anderen Teilen 10b bzw. 11b verschiebbar. Die betreffenden Verhältnisse sind bezüglich der Teile 11a und 11b näher gezeigt. Danach ist der Teil 11a mit Führungszapfen 61 in Buchsen 62 verschiebbar gelagert, die in dem Teil 11b untergebracht sind. Durch Druckfedern 63 und Begrenzungs- bzw. Einstellmuttern 64 ist sichergestellt, daß normalerweise der Teil 11a an dem Teil 11b anliegt, wie dies Fig. 5 zeigt. Die Muttern 64, die Federn 63 und die Schäfte 61 sind im Bereich des Teiles 11b jeweils von einer Schutzkappe 60 abgedeckt. Das Teil 10b gemäß Fig. 5 ist mit entsprechenden Abdeckkappen 59 versehen, die dort entsprechende Elemente abdecken wie die Abdeckkappen 60.

Zwischen dem Teil 11a und dem Teil 11b sind gemäß Fig. 5 Zwischenräume vorhanden, die jeweils durch ein Druckkissen 54 bzw. 55 ausgefüllt sind. Diese Druckkissen sind durch Befestigungselemente 69, wie Schrauben, an dem Teil 11b befestigt. Außerdem weisen die Druckkissen Druckmittelanschlüsse 56 bzw. 57 auf, mit denen sie an einer Druckmittelquelle anschließbar sind.

Wird dem jeweiligen Druckkissen 54, 55 ein Druckmittel zugeführt, so hebt das betreffende Druckkissen 54 bzw. 55 den als Druckplatte wirkenden Teil 11a von dem als Anlageplatte dienenden Teil 11b ab. Wird das Druckmittel aus den Druckkissen 54, 55 wieder herausgeführt, so sorgen die erwähnten Federn 63 dafür, daß der als Druckplatte dienende Teil 11a wieder in die aus Fig. 5 ersichtliche Lage gelangt. An dieser Stelle sei angemerkt, daß auch die Teile 10a, 10b mit entsprechenden Druckkissen ausgestattet sind.

Die bezüglich der Platten eines Plattenstapels die Funktion von Haltegliedern erfüllenden Teile 10a, 10b sowie 11a, 11b sind von Führungsstäben 52,53 aufgenommen, die in bezug auf eine Traganordnung 58 der dargestellten Vorrichtung festliegen. Die betreffenden Führungsstäbe können vorzugsweise Gewindestangen sein, auf die mit dem Teil 10a verbundene Muttern 65 bzw. 67 und mit dem Teil 11b verbundene Muttern 66 bzw. 68 zusammenwirken. Durch Einstellen dieser Muttern kann der Abstand zwischen den Haltegliedern 10a, 10b und 11a, 11b entsprechend den jeweils vorliegenden Bedürfnissen eingestellt werden.

Die für die Abführung bzw. Zuführung von Platten dienende Plattenführungseinrichtung weist gemäß Fig. 5 Stützstäbe 14,15 auf, von denen der Stützstab 15 deutlicher sichtbar ist. Die beiden Stützstäbe 14,15 sind jeweils durch zwei Hubzylinder bewegbar. Der Stützstab 14 ist durch zwei Hubzylinder 16a, 16b bewegbar, die der Trageinrichtung 16 gemäß Fig. 2a bis 2e entsprechen. Der Stützstab 15 ist durch zwei Hubzylinder 17a, 17b bewegbar, die der Trageinrichtung 16 gemäß Fig. 2a bis 2e entsprechen. Ferner ist jeder Stützstab an seinen Enden mit Hubbegrenzungseinrichtungen versehen, die durch Einstellglieder einstellbar sind, von denen in

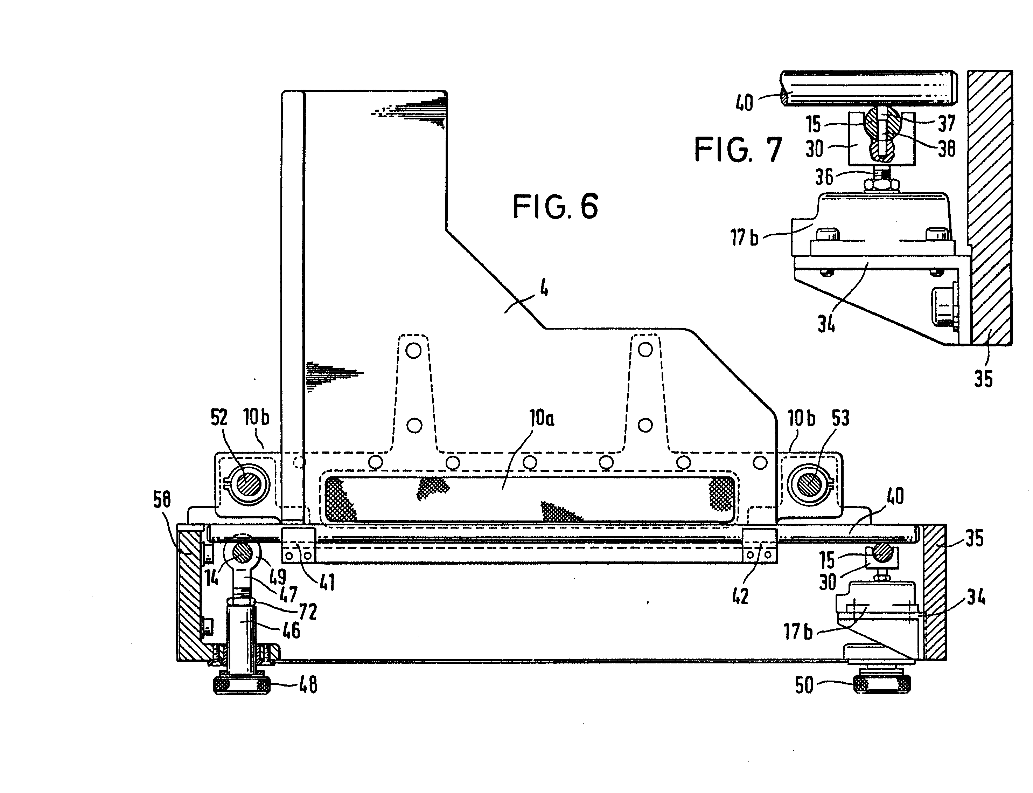

Fig. 5 zwei Einstellglieder 50,51 angedeutet sind. An dieser Stelle sei angemerkt, daß die in Fig. 6 dargestellte Schnittansicht längs der in Fig. 5 eingetragenen Schnittlinie VI-VI den Aufbau einer Hubbegrenzungseinrichtung näher veranschaulicht. Bei dieser Hubbegrenzungseinrichtung handelt es sich um diejenige Hubbegrenzungseinrichtung, die sich im oberen linken Bereich der Vorrichtung gemäß Fig. 5 unterhalb des dort angedeuteten Haltegliedes mit den beiden Teilen 10a,10b befindet.

Von den Stützstäben 14,15 sind Tragstäbe 40,45 getragen, auf denen die einzelnen Platten abgeführt bzw. zugeführt werden. Die Tragstäbe, wie der Tragstab 40, liegen dabei im einfachsten Fall auf den Stützstäben 14, 15 auf, wie dies insbesondere aus Fig. 6 hervorgeht. Um ein Wegrollen der Tragstäbe zu vermeiden, sind diese im Bereich des jeweiligen Haltegliedes mit seinen Teilen 10a, 10b bzw. 11a, 11b festgehalten. So ist der Tragstab 40 von Haltegliedern 41,42 festgehalten, die, wie Fig. 6 erkennen läßt, den betreffenden Tragstab 40 nur teilweise umgreifen. In entsprechender Weise ist der Tragstab 45 von Haltegliedern 43, 44 festgehalten. Die Halteglieder 41, 42 sind mit dem Teil 10a verbunden, und die Halteglieder 43, 44 sind mit dem Teil 11a verbunden.

Zusätzlich zu den vorstehend betrachteten Elementen zeigt die Darstellung gemäß Fig. 5 noch zwei Gleitführungsschienen 70, 71 für die Gleitführung der Schiebeeinrichtung 22, die durch Strichpunktlinien angedeutet ist. Die Gleitführungsschienen 70, 71 sind mit ihren Enden an gegenüberliegenden Seiten der Anordnung 58 befestigt. Sie verlaufen rechtwinklig zu der Bewegungsrichtung der Teile 10a, 11a der betrachteten Halteglieder.

Zu der in Fig. 6 dargestellten Schnittansicht sei noch angemerkt, daß diese in ihrem linken unteren Bereich den Aufbau einer Hubbegrenzungseinrichtung näher zeigt. Die betreffende Hubbegrenzungseinrichtung weist eine im Boden der Traganordnung 58 lediglich drehbar aufgenommene Gewindehülse 46 mit einem Einstellglied 48 auf. In dieser Hülse ist ein Gewindeschaft 47 aufgenommen, der an seinem oberen Ende einen ösenförmigen Aufnahmeteil 49 für die Aufnahme des Stützstabes 14 aufweist. Durch eine Sicherungsmutter 72 kann die Einstellung zwischen der Hülse 46 und dem Gewindeschaft 47 gesichert werden. Durch bei gelöster Mutter 72 erfolgender Drehung des Einstellgliedes 48 kann der Stützstab 14 und damit der Tragstab 40 entsprechend angehoben bzw. abgesenkt werden.

Im unteren rechten Teil der Fig. 6 ist der in Fig. 5 angedeutete Hubzylinder 17b in einer Seitenansicht gezeigt. Der Hubzylinder 17b ist mittels eines Winkelteiles 34 an der Seitenwand 35 der Traganordnung 58 angebracht. An seinem oberen Ende trägt der Hubzylinder 17b die in Fig. 3 bereits angedeutete Aufnahme 30, die hier ebenfalls einen Tragstab 15 trägt, der allerdings im Unterschied zu den in Fig. 3 dargestellten Verhältnissen hier als Stützstab für den Tragstab 40 dient.

Durch die aus Fig. 5 und 6 ersichtliche Anordnung bezüglich der Tragstäbe 40, 45 ergibt sich somit, daß die Hubbegrenzungseinrichtungen, deren eine im unteren linken Teil der Fig. 6 näher gezeigt ist, dafür sorgen, daß die unterste Lage der Tragstäbe 40, 45 in bezug auf den von der Vorrichtung festgehaltenen Plattenstapel festgelegt ist, daß aber die obere Lage dieser Tragstäbe 40, 45 lediglich durch den Hub der Hubzylinder festgelegt ist. Damit eignet sich diese Ausführungsform der Vorrichtung gemäß der Erfindung besonders gut dazu, die oben im Zusammenhang mit Fig. 2a bis 2e erläuterten Funktionen des Abgebens und Aufnehmens von Platten auszuführen.

In Fig. 7 ist in einer vergrößerten Einzelansicht eine Modifikation der im unteren rechten Teil der in Fig. 6 dargestellten Anordnung gezeigt. Wie ersichtlich, ist der Hubzylinder 17b mittels des Winkelteiles 34 an der Wand 35 befestigt. Von einer Hubstange 36 des Hubzylinders 17b wird gemäß Fig. 7 ein modifiziertes Tragelement 30 getragen, welches in wenigstens einer Öffnung einen Stift 38 aufnimmt, der von einer entsprechenden Öffnung 37 des Stützstabes 15 aufgenommen ist. Damit ist der Stützstab 15, der den Tragstab 40 trägt, sicher in dem Tragelement 30 festgehalten.

## Patentansprüche

1. Vorrichtung zur Abgabe und/oder Aufnahme von Platten, insbesondere Leiterplatten, von bzw. in einem Plattenstapel (1) mit einer Aufnahmeeinrichtung (2;10,11) für den Plattenstapel (1) und mit einer zur Plattenabführung bzw. zur Plattenzuführung dienenden Plattenführungseinrichtung (3;14,15,16,17),

d a d u r c h   g e k e n n z e i c h n e t , daß die Aufnahmeeinrichtung (2;10,11) zwei einander gegenüberliegender Halteglieder (10,11) aufweist, die in zwei Stellungen relativ zueinander bewegbar sind, in deren einer der Plattenstapel (1) erfaßt und in deren anderer der Plattenstapel (1) freigegeben ist, daß die Plattenführungseinrichtung (3;14,15,16,17) in Abstand unterhalb der Aufnahmeeinrichtung (2; 10,11) vorgesehen ist und daß die Aufnahmeeinrichtung (2;10,11) und die Plattenführungseinrichtung (3;14,15,16,17) derart relativ zueinander bewegbar sind, daß der von den Haltegliedern (10,11) der Aufnahmeeinrichtung (2;10, 11) erfaßte Plattenstapel (1) unter Freigabe von den Haltegliedern (10,11) mit seiner untersten Platte (23) von der Plattenführungseinrichtung (3;14,15, 16,17) bzw. von einer darauf zugeführten Platte aufnehmbar ist, woraufhin der um die unterste Platte (23) verminderte bzw. vermehrte Plattenstapel von den Haltegliedern (10,11) der Aufnahmeeinrichtung (2;10,11) erfaßbar und die Plattenführungseinrichtung (3;14,15,16,17) entsprechend einem die Dicke einer Platte übersteigenden Abstand von den Haltegliedern (10,11) zur Abführung der aufgenommenen Platte (23) bzw. zur Zuführung einer neuen Platte absenkbar ist.

2. Vorrichtung nach Anspruch 1, dadurch gekennzeichnet, daß die Halteglieder (10,11) jeweils an einer Mehrzahl von Platten anzuliegen vermögen.

3. Vorrichtung nach Anspruch 1 oder 2, dadurch gekennzeichnet, daß die Halteglieder (10,11) in der Ebene der Platten des Plattenstapels (1) verschiebbar sind.

4. Vorrichtung nach einem der Ansprüche 1 bis 3, dadurch gekennzeichnet, daß die Plattenführungseinrichtung (3;14,15,16,17) zwei runde Tragstäbe (14,15) aufweist, die durch eine Heb- bzw. eine Senkeinrichtung (16 bzw. 17) in bezug auf die Halteglieder (10,11) heb- bzw. senkbar sind.

5. Vorrichtung nach einem der Ansprüche 1 bis 3, dadurch gekennzeichnet, daß die Plattenführungseinrichtung die jeweilige Platte (23) auf Druckluft tragende Tragstäbe (31) enthält.

6. Vorrichtung nach einem der Ansprüche 1 bis 5, dadurch gekennzeichnet, daß die Halteglieder (10,11) und die Plattenführungseinrichtung (3;14,15,16,17) fluidbetätigte Betätigungsglieder (12,13;16,17) aufweisen.

7. Vorrichtung nach Anspruch 6, dadurch gekennzeichnet, daß die Halteglieder (10,11) an fluidbetätigten Druckkissen (54,55) anliegende Druckplatten (10a,11a) aufweisen.

8. Vorrichtung nach einem der Ansprüche 1 bis 7, dadurch gekennzeichnet, daß mit der Plattenführungseinrichtung (14,15,16,17) Einstellglieder (18,19,20, 21; 46,47) verbunden sind, die den Bewegungshub der Plattenführungseinrichtung jeweils in einer Bewegungsrichtung festlegen.

9. Vorrichtung nach Anspruch 4 und 8, dadurch gekennzeichnet, daß die Tragstäbe (40,45) von Stützstäben (14,15) getragen sind, die mit Betätigungsgliedern (16a,16b,17a,17b) und mit den Einstellgliedern (46,47) verbunden sind.

10. Vorrichtung nach einem der Ansprüche 1 bis 9, dadurch gekennzeichnet, daß die Aufnahmeeinrichtung (2;10,11) für den Plattenstapel (1) und die Plattenführungseinrichtung (3;14,15,16,17) derart schräg angeordnet sind, daß Platten einzeln durch die Erdschwerkraft abführbar bzw. zuführbar sind.

11. Vorrichtung nach einem der Ansprüche 1 bis 10, dadurch gekennzeichnet, daß die Abführung bzw. die Zuführung jeder Platte von bzw. auf der Plattenführungseinrichtung (3;14,15,16,17) mittels eines Schiebers (22) erfolgt.

FIG. 1

0141064

FIG. 2

3 5

# FIG. 3

10    1

29    23    15    22    30

17a    17b    28

23

32    33

FIG. 4    Druckluftquelle

31

FIG. 5

FIG. 6

FIG. 7

0141064

**Europäisches Patentamt**

**EUROPÄISCHER RECHERCHENBERICHT**

Nummer der Anmeldung

| | **EINSCHLÄGIGE DOKUMENTE** | | EP 84109123.4 |

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y | <u>DE - A - 2 250 536</u> (IMA KLESS-MANN KG) | 1 | B 65 G 60/00 |
| | * Gesamt * | | |
| X | | 2,3 | |
| | -- | | |
| Y | <u>DE - A - 1 963 968</u> (FÖRDERTECHNIK HAMBURG HARRY LASSIG) | 1 | |
| | * Gesamt * | | |
| A | | 4 | |
| | -- | | |
| D,A | <u>DE - A1 - 2 814 954</u> (LUTHER, MAELZER) | 10 | |
| | * Fig. 1 * | | |
| | -- | | |
| D,A | <u>DE - A1 - 2 814 955</u> (LUTHER, MAELZER) | 11 | RECHERCHIERTE SACHGEBIETE (Int. Cl.4) |
| | * Anspruch 3 * | | B 65 G |
| | ---- | | H 05 K |
| | | | G 01 R |

Der vorliegende Recherchenbericht wurde für alle Patentansprüche erstellt.

| Recherchenort | Abschlußdatum der Recherche | Prüfer |
|---|---|---|
| WIEN | 04-01-1985 | PISSENBERGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82